# EUROPEAN PATENT APPLICATION

(11) **EP 3 388 785 A1**
(43) Date of publication of application: **17.10.2018**
(21) Application number: 15911992.4
(22) Date of filing: 31.12.2015
(51) Int. Cl.: G01C 21/00

(54) **ROUTE RECOMMENDING METHOD, ELECTRONIC DEVICE AND GRAPHICAL USER INTERFACE**

(71) Applicant: Huawei Technologies Co., Ltd., Longgang District Shenzhen, Guangdong 518129 (CN)
(72) Inventor: XU, Jie, Shenzhen Guangdong 518129 (CN); SUN, Xue, Shenzhen Guangdong 518129 (CN); WANG, Qin, Shenzhen Guangdong 518129 (CN); CHEN, Cuiyu, Shenzhen Guangdong 518129 (CN)
(74) Representative: Maiwald Patent- und Rechtsanwaltsgesellschaft mbH
(86) International application number: PCT/CN2015/100283
(87) International publication number: WO 2017/113367

(57) **Abstract**

Embodiments of the present invention disclose a route recommendation method, an electronic device, and a graphical user interface. The method includes: obtaining a specified route shape; obtaining specified map information; determining at least one route that is in the map information and matches the route shape; and recommending the at least one route to a user of the electronic device. After the embodiments of the present invention are implemented, a personalized workout route can be recommended to the user.

## Description

### TECHNICAL FIELD

The present invention relates to the field of communications technologies, and in particular, to a route recommendation method, an electronic device, and a graphical user interface.

### BACKGROUND

As people attach greater importance to health, a growing quantity of users consider a workout as a part of daily life. To detect a workout of a user, the user generally installs a workout application on a user terminal, and uses the workout app to draw a workout route of the user and record some workout parameters in a workout process, for example, a workout distance, workout duration, a workout speed, and calories consumed in a workout. In addition, to attract attention and supervise exercise of the user, the user usually prefers to share a workout result (the workout route, a workout parameter, and the like) of the user in a social application circle.

However, it is found from practice that the workout app draws the workout route according to a workout track of the user. Generally, the user is used to doing a workout on a road in a workout area familiar to the user. Consequently, the workout app almost draws a same workout route each time. As a result, it may be learned that the workout app cannot recommend a personalized workout route to the user, and this is unfavorable for motivating the user to exercise more.

### SUMMARY

Embodiments of the present invention disclose a route recommendation method, an electronic device, and a graphical user interface, so as to recommend a personalized workout route to a user.

A first aspect of the embodiments of the present invention discloses a route recommendation method, applied to an electronic device, where the method includes:
obtaining a specified route shape, where the specified route shape is a route shape specified by a user before the user does a workout or a route shape specified by a system by default before a user does a workout, and the route shape specified by the user may be manually entered by the user on the electronic device, for example, a digit, a letter, a symbol, or a pattern, or is specified by the user by selecting a graphic in a graphic library provided on the electronic device;
obtaining specified map information, where the specified map information may be map information of a position in which the user is currently located, or map information of another position specified by the user;
determining at least one route that is in the map information and matches the route shape; and
recommending the at least one route to the user of the electronic device.

Before the user does a workout, the electronic device may plan, for the user according to the route shape and the map information that are specified by the user, a route matching the route shape. A workout track recorded after the user does a workout according to the planned route matches the specified route shape. Therefore, a requirement of the user for a personalized workout route shape can be met, and in addition, the user is motivated to exercise more, and a desire for sharing is improved.

With reference to the first aspect of the embodiments of the present invention, in a first possible implementation of the first aspect of the embodiments of the present invention, the determining at least one route that is in the map information and matches the route shape includes:
determining, if the specified map information includes route information, whether the route information includes at least one route matching the route shape; and
if the route information includes at least one route matching the route shape, determining the at least one route.

The map information may include route information (for example, a map of an urban area includes route information), or may not include route information (for example, a map of a desert does not include route information).

With reference to the first possible implementation of the first aspect of the embodiments of the present invention, in a second possible implementation of the first aspect of the embodiments of the present invention, the method further includes:
obtaining a specified workout parameter, where the workout parameter includes at least one of a workout type, a workout distance, workout duration, or workout calories (that is, calories consumed in a workout); and
the determining, if the specified map information includes route information, whether the route information includes at least one route matching the route shape includes:
   if the specified map information includes route information, determining whether the route information includes at least one route that matches the route shape and meets the workout parameter.

A matched route needs to not only match the route shape but also meet the specified workout parameter. In this way, not only the requirement of the user for a personalized route shape can be met, but also a workout parameter can be specified according to a user requirement, so that user experience is improved.

With reference to any one of the first aspect, or the first to the second possible implementations of the first aspect, in a third possible implementation of the first aspect of the embodiments of the present invention, the method further includes:
mapping the at least one route in the map information;
determining a target route from the mapped at least one route according to a preset rule or user selection; and
recording a workout track of the user.

The electronic device may determine the target route for the user according to the preset rule or the user selection, and record the workout track. In this way, a workout track matching the specified route shape can be presented to the user.

With reference to the first possible implementation of the first aspect, in a fourth possible implementation of the first aspect of the embodiments of the present invention, the method further includes:
determining at least one participant;
the obtaining specified map information includes:
   obtaining map information specified by each participant, where the map information specified by all the participants may be the same or different; and
   the determining, if the specified map information includes route information, whether the route information includes at least one route matching the route shape includes:
      for each participant, if the map information specified by the participant includes route information, determining whether the route information included in the map information specified by the participant includes a corresponding route of the participant, where the corresponding routes of all the participants are combined to form at least one route matching the route shape; and if the route information includes the corresponding route of the participant, determining that the route information includes at least one route matching the route shape.

Multiple participants may jointly complete the route matching the specified route shape. In this way, not only the requirement of the user for a personalized route shape can be met, but also interaction between different users can be enhanced, so that the user is motivated to exercise more, and a desire for sharing is improved.

With reference to the fourth possible implementation of the first aspect, in a fifth possible implementation of the first aspect of the embodiments of the present invention, the method further includes:
determining a workout parameter specified by each participant, where the corresponding route of the participant includes a route that is in the route information included in the map information specified by the participant and that meets the workout parameter specified by the participant. Each participant may specify a workout parameter of the participant according to a requirement of the participant, so that user experience can be improved.

With reference to the fourth or the fifth possible implementation of the first aspect, in a sixth possible implementation of the first aspect of the embodiments of the present invention, the method further includes:
mapping the at least one route in the map information;
determining a target route from the mapped at least one route according to a preset rule or user selection, where the target route includes the corresponding route of each participant;
sending the corresponding route of each participant that is included in the target route to the corresponding participant;
receiving a workout track sent by each corresponding participant; and
splicing all the workout tracks.

After determining the target route, the electronic device may send the corresponding route of each participant that is included in the target route to the corresponding participant. In this way, each participant can do a workout according to the corresponding route of the participant, record the workout track of the participant, and send the workout track of the participant to the electronic device. After receiving all the workout tracks, the electronic device may splice all the workout tracks, to obtain a workout track matching the route shape.

With reference to the second possible implementation of the first aspect, in a seventh possible implementation of the first aspect of the embodiments of the present invention, the method further includes:
obtaining a specified quantity of sub-routes, where a quantity of sub-routes may be specified by the user, or a quantity of sub-routes may be specified by means of recommendation by the electronic device; and
dividing each of the at least one route into multiple sub-routes whose quantity matches the specified quantity of sub-routes. If the quantity of sub-routes is specified by means of recommendation by the electronic device, the electronic device may perform sub-route division according to stored user data, for example, according to average workout intensity, or in a mode in which workout intensity is gradually increased, or in an enhancement mode, or in a recovery mode.

The route matching the specified route shape may be completed by one person in multiple times of workout. In this way, a complex specified route shape can be individually completed, and the following problem can also be resolved: A workout track is undiversified and lacks variety because of limitations such as an individual workout amount and a fixed route. Therefore, a workout interest is improved, and workout enthusiasm of the user is enhanced.

With reference to the seventh possible implementation of the first aspect, in an eighth possible implementation of the first aspect of the embodiments of the present invention, the method further includes:
mapping the at least one route in the map information;
determining a target route from the mapped at least one route according to a preset rule or user selection, where the target route includes multiple sub-routes; and
recording a workout track of the user.

The electronic device records a workout track obtained each time the user does a workout, and may further display the workout track in each time of workout in the specified map information, so as to facilitate viewing of the user.

With reference to the third, the sixth, or the eighth possible implementation of the first aspect, in a ninth possible implementation of the first aspect of the embodiments of the present invention, the determining a target route from the mapped at least one route according to a preset rule or user selection includes:
for each mapped route, obtaining an air quality index of an area to which the route belongs, and determining, from the at least one route, a route with a minimum air quality index as the target route according to all the air quality indexes; or
for each mapped route, obtaining people flow information of the route, and determining, from the at least one route, a route with minimum people flow as the target route according to all the people flow information; or
receiving a selection instruction for any one of the mapped at least one route, and determining a selected route as the target route, so as to respond to the selection instruction.

The electronic device may determine, from the at least one route, the route with the minimum air quality index as the target route, so that the user can do a workout in a route with relatively good air quality. Alternatively, the electronic device may determine, from the at least one route, the route with the minimum people flow as the target route, so that the user may not need to worry that a workout is affected because the route is crowded with people. Alternatively, the user may directly perform selection in the mapped at least one route, and the electronic device determines a route selected by the user as the target route, so that a requirement of the user for a personalized route is better met, and user experience is improved.

With reference to the first aspect, in a tenth possible implementation of the first aspect, the determining at least one route that is in the map information and matches the route shape includes:
if the specified map information does not include route information, planning, in an area specified in the map information, at least one route matching the route shape.

If the specified map information does not include route information, the electronic device does not need to match the route shape with the route information, but directly plans, for the user in the specified area, at least one route matching the route shape.

A second aspect of the embodiments of the present invention discloses an electronic device, where the electronic device includes a functional unit, configured to perform some or all steps of any method in the first aspect of the embodiments of the present invention. When the electronic device performs some or all the steps of any method in the first aspect, a requirement of a user for a personalized workout route shape can be met, and in addition, the user is motivated to exercise more, and a desire for sharing is improved.

A third aspect of the embodiments of the present invention discloses an electronic device, where the electronic device includes a processor, an input apparatus, an output apparatus, and a memory. The memory is configured to store an instruction, and the processor is configured to run the instruction. The processor runs the instruction, so as to perform some or all steps of any method in the first aspect of the embodiments of the present invention. When the electronic device performs some or all the steps of any method in the first aspect, a requirement of a user for a personalized workout route shape can be met, and in addition, the user is motivated to exercise more, and a desire for sharing is improved.

A fourth aspect of the embodiments of the present invention discloses a graphical user interface of an electronic device, where the electronic device includes a display, an input apparatus, an output apparatus, a memory, and a processor that is configured to execute one or more application programs stored in the memory, and the graphical user interface includes at least two display areas to:
display specified map information in a first display area;
detect an input instruction in a second display area, where the input instruction includes an entered route shape; and
in response to the input instruction, map, in the specified map information, at least one route matching the route shape.

With reference to the fourth aspect, in a first possible implementation of the fourth aspect, the input instruction further includes an entered workout parameter, and the mapping, in the specified map information, at least one route matching the route shape includes:
mapping, in the specified map information, at least one route that matches the route shape and meets the workout parameter.

With reference to the fourth aspect or the first possible implementation of the fourth aspect, in a second possible implementation of the fourth aspect, the graphical user interface further includes:
highlighting each of the at least one route by using a different color, or a line with different thickness, or a different line shape (such as a solid line, a dotted line, or a dashed line).

With reference to the fourth aspect or the second possible implementation of the fourth aspect, in a third possible implementation of the fourth aspect, the graphical user interface further includes:
in response to a detected selection instruction for a target route in the at least one route, unhighlighting a route other than the target route in the at least one route.

A fifth aspect of the embodiments of the present invention discloses a computer storage medium, where the computer storage medium stores a program. The program specifically includes an instruction used to perform some or all steps of any method in the first aspect of the embodiments of the present invention.

In some feasible implementations, after the electronic device obtains a workout route shape matching the specified route shape, the electronic device may further send the workout route shape to a social circle, to share a personalized route shape of the user.

In the embodiments of the present invention, the electronic device may obtain the specified route shape and the specified map information, and determine at least one route that is in the map information and matches the route shape. In this way, the electronic device can recommend the at least one route to the user. It may be learned that, according to the embodiments of the present invention, before the user starts to do a workout, the electronic device may obtain a route shape specified by the user in a workout app, and recommend, to the user according to the route shape and map information, a personalized workout route that meets the route shape. If the user does a workout according to the recommended personalized route, after the user completes the workout, the workout app generates a workout route shape matching the route shape. In this way, the requirement of the user for a personalized workout route shape can be met, and in addition, the user is motivated to exercise more, and a desire for sharing is improved.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show only some embodiments of the present invention, and a person of ordinary skill in the art may still derive other drawings from these accompanying drawings without creative efforts.

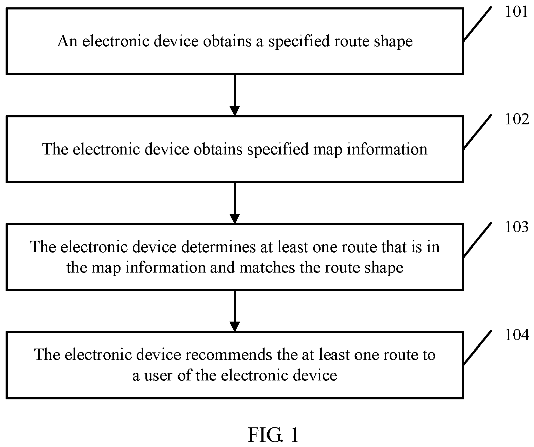

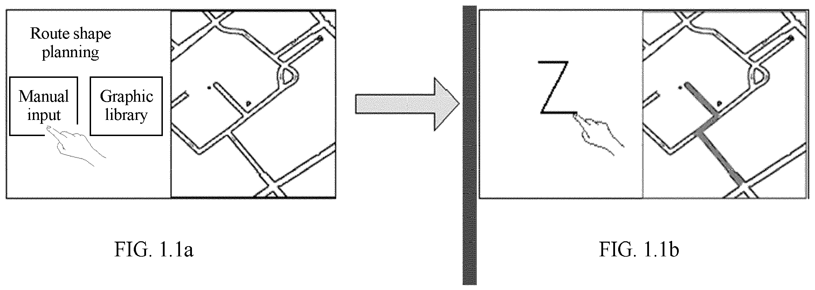

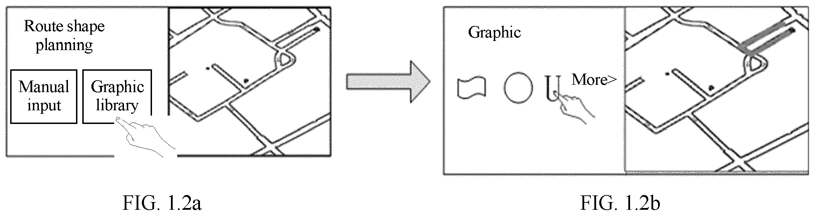

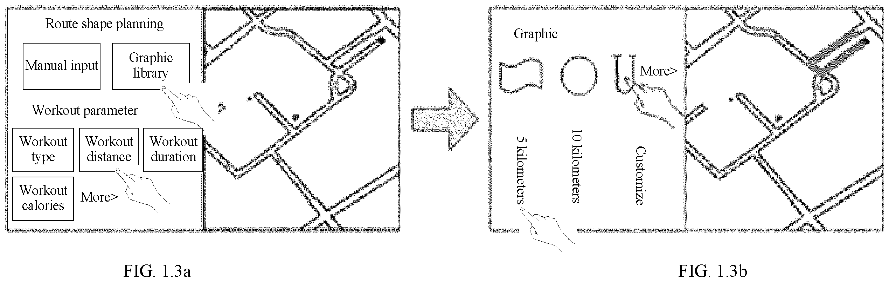

FIG. 1 is a schematic flowchart of a route recommendation method according to an embodiment of the present invention;
FIG. 1.1a is a graphical user interface of an electronic device according to an embodiment of the present invention;
FIG. 1.1b is another graphical user interface of an electronic device according to an embodiment of the present invention;
FIG. 1.2a is another graphical user interface of an electronic device according to an embodiment of the present invention;
FIG. 1.2b is another graphical user interface of an electronic device according to an embodiment of the present invention;
FIG. 1.3a is another graphical user interface of an electronic device according to an embodiment of the present invention;
FIG. 1.3b is another graphical user interface of an electronic device according to an embodiment of the present invention;
FIG. 2A and FIG. 2B are schematic flowcharts of another route recommendation method according to an embodiment of the present invention;

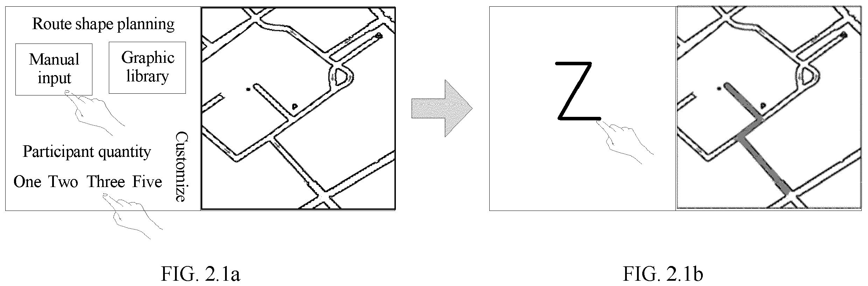

FIG. 2.1a is another graphical user interface of an electronic device according to an embodiment of the present invention;
FIG. 2.1b is another graphical user interface of an electronic device according to an embodiment of the present invention;

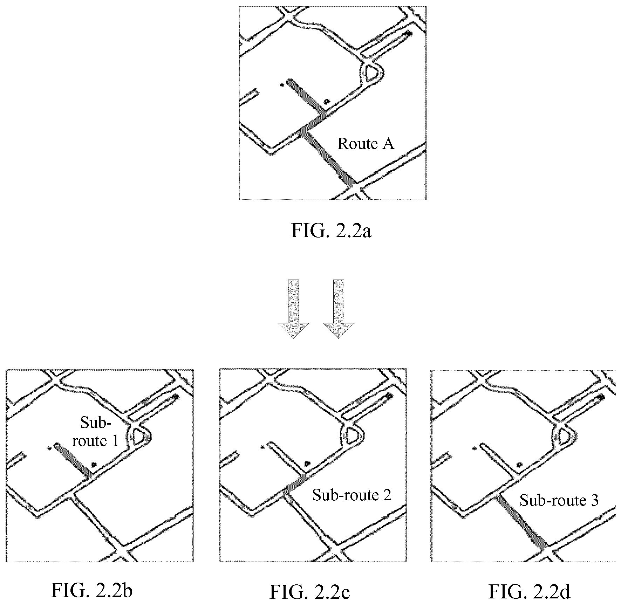

FIG. 2.2a is another graphical user interface of an electronic device according to an embodiment of the present invention;
FIG. 2.2b is another graphical user interface of an electronic device according to an embodiment of the present invention;
FIG. 2.2c is another graphical user interface of an electronic device according to an embodiment of the present invention;
FIG. 2.2d is another graphical user interface of an electronic device according to an embodiment of the present invention;

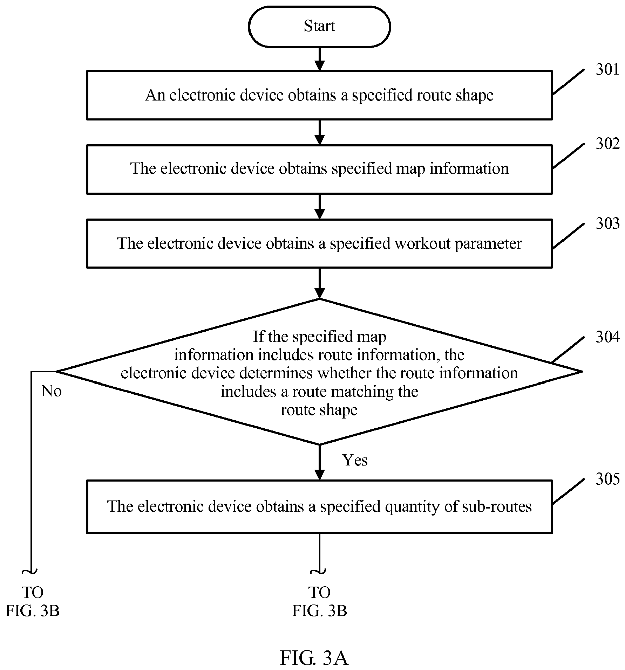

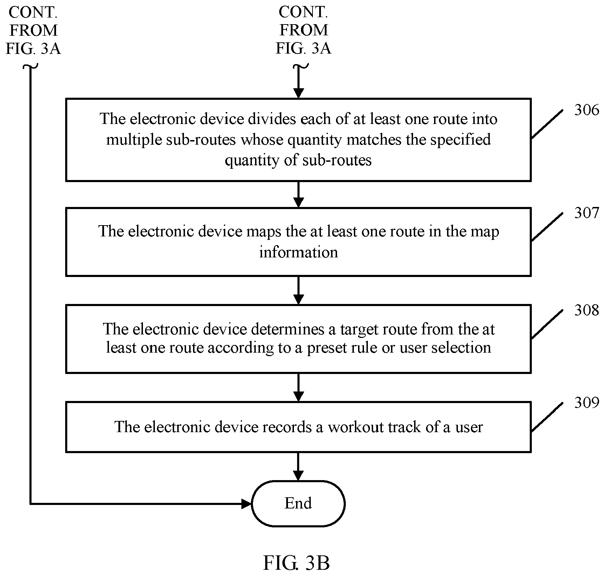

FIG. 3A and FIG. 3B are schematic flowcharts of another route recommendation method according to an embodiment of the present invention;

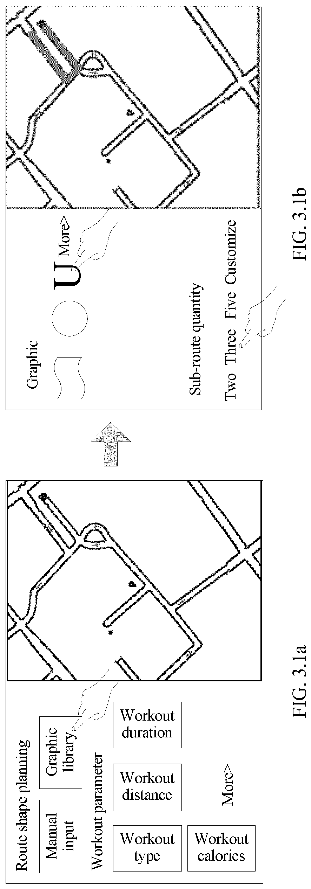

FIG. 3.1a is another graphical user interface of an electronic device according to an embodiment of the present invention;
FIG. 3.1b is another graphical user interface of an electronic device according to an embodiment of the present invention;

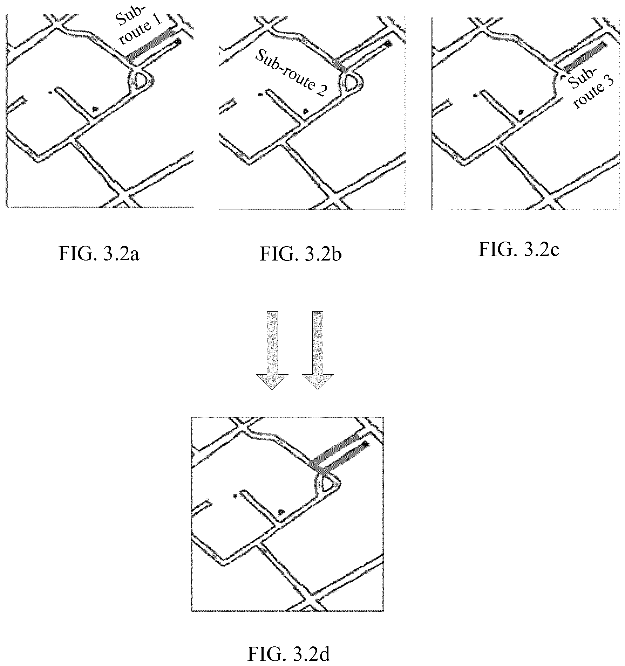

FIG. 3.2a is another graphical user interface of an electronic device according to an embodiment of the present invention;
FIG. 3.2b is another graphical user interface of an electronic device according to an embodiment of the present invention;
FIG. 3.2c is another graphical user interface of an electronic device according to an embodiment of the present invention;
FIG. 3.2d is another graphical user interface of an electronic device according to an embodiment of the present invention;

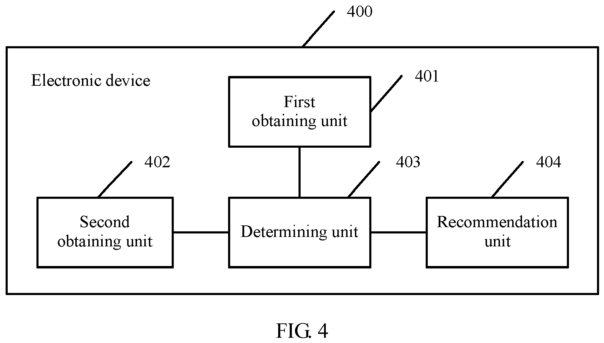

FIG. 4 is a schematic structural diagram of an electronic device according to an embodiment of the present invention;

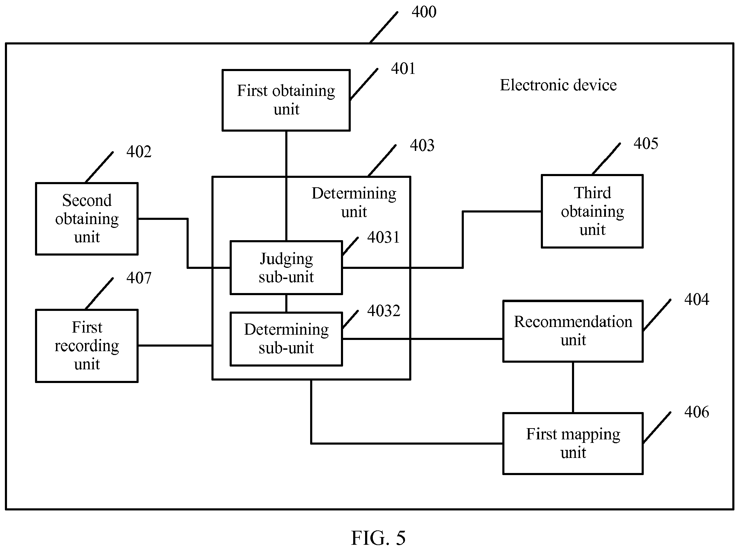

FIG. 5 is a schematic structural diagram of another electronic device according to an embodiment of the present invention;

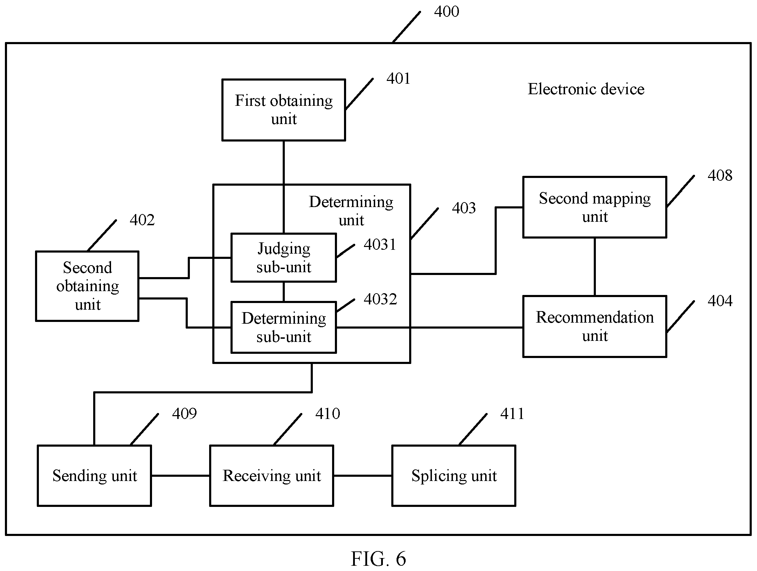

FIG. 6 is a schematic structural diagram of another electronic device according to an embodiment of the present invention;

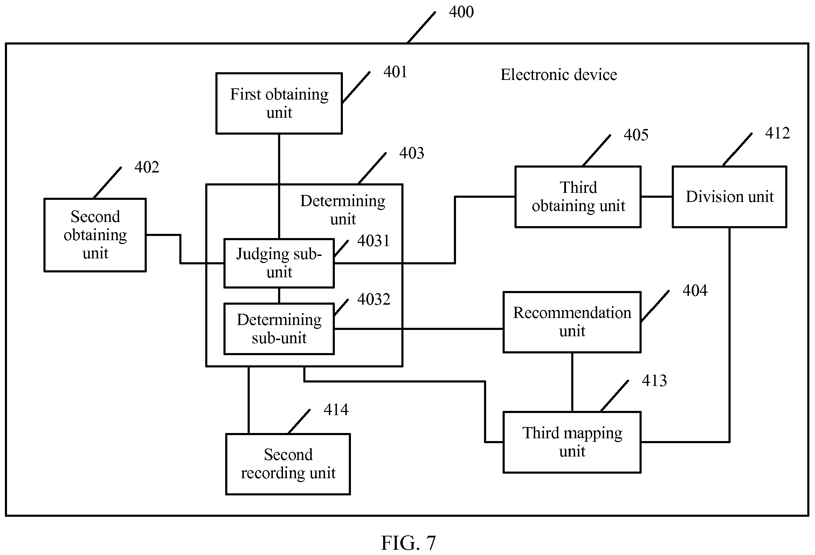

FIG. 7 is a schematic structural diagram of another electronic device according to an embodiment of the present invention; and

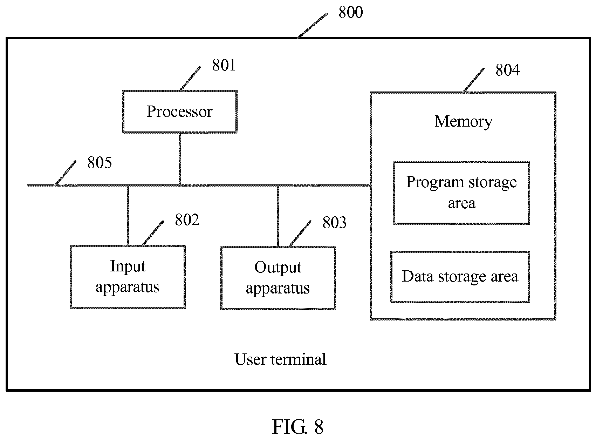

FIG. 8 is a schematic structural diagram of another electronic device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are only some but not all of the embodiments of the present invention. All other embodiments obtained by a person of ordinary skill in the art based on the embodiments of the present invention without creative efforts shall fall within the protection scope of the present invention.

In the specification, claims, and accompanying drawings of the present invention, the terms "first", "second", "third", "fourth", and the like are intended to distinguish between different objects but do not indicate a particular sequence. In addition, the terms "include", "contain", or any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Embodiments of the present invention disclose a route recommendation method, an electronic device, and a graphical user interface, so as to recommend a personalized workout route to a user. Details are separately described below.

In the embodiments of the present invention, the electronic device may be a terminal with a route recommendation function. The terminal may include but is not limited to the following various user terminals: a smartphone, a notebook computer, a personal computer (Personal Computer, PC), a personal digital assistant (Personal Digital Assistant, PDA), a mobile Internet device (Mobile Internet Device, MID), and an intelligent wearable device (such as a smartwatch or a smart band). Alternatively, the electronic device may be a server with a route recommendation function.

Referring to FIG. 1, FIG. 1 is a schematic flowchart of a route recommendation method according to an embodiment of the present invention. The route recommendation method is applied to an electronic device. As shown in FIG. 1, the method may include the following steps.

101. The electronic device obtains a specified route shape.

In this embodiment of the present invention, the specified route shape is a route shape specified by a user before the user does a workout or a route shape specified by a system by default before a user does a workout. The route shape specified by the user may be manually entered by the user on the electronic device, for example, a digit, a letter, a symbol, or a pattern, or is specified by the user by selecting a graphic in a graphic library provided on the electronic device; or may be a shape specified in cyberspace by using a network connection.

In this embodiment of the present invention, the electronic device needs to start a workout app in advance, and outputs a user interface used to specify a route shape. On the user interface, the user may independently choose whether to manually enter the route shape or select a graphic in the graphic library. The workout app may record some workout parameters of the user in a workout process, such as a workout distance, workout duration, a workout speed, and calories consumed in a workout. In addition, the workout app may further draw a workout route of the user.

102. The electronic device obtains specified map information.

In this embodiment of the present invention, the specified map information may be map information of a position in which the user is currently located, or map information of another position (a position in which the user does a workout) specified by the user. The map information may include road information (for example, map information of an urban area), or may not include road information (for example, map information of a desert).

Specifically, the user may specify map information of a position by entering information such as a place name, latitude and longitude, or GPS information. Alternatively, the user may directly locate map information of a position by specifying the position on a map. Alternatively, the user may directly specify map information of a stored position by using the position stored in a historical record. This is not limited in this embodiment of the present invention.

103. The electronic device determines at least one route that is in the map information and matches the route shape.

In this embodiment of the present invention, after the electronic device obtains the specified route shape and the specified map information, the electronic device may determine at least one route that is in the map information and matches the route shape.

If the map information includes road information, the electronic device may match the road information with the specified route shape, so as to determine at least one route matching the route shape. Alternatively, if the map information does not include road information, the electronic device may directly plan, for the user, at least one route matching the specified route shape.

In an optional implementation, a manner in which the electronic device determines at least one route that is in the map information and matches the route shape may be specifically:
determining, if the specified map information includes route information, whether the route information includes at least one route matching the route shape; and
if the route information includes at least one route matching the route shape, determining the at least one route.

In the optional implementation, the specified map information includes route information. The electronic device may match the route information with the route shape, and determine whether the route information includes at least one route matching the route shape. If the route information includes at least one route matching the route shape, the electronic device may determine the at least one route. For example, it is assumed that the route shape is a digit "11". If the electronic device determines, after matching the route information with the digit "11", that the route information includes at least one route matching the digit "11", the electronic device may determine the matched at least one route.

In another optional implementation, a manner in which the electronic device determines at least one route that is in the map information and matches the route shape may be specifically:
if the specified map information does not include route information, planning, in an area specified in the map information, at least one route matching the route shape.

In the optional implementation, the specified map information does not include route information, for example, a desert, the Gobi, on the sea, in the air, or a large open area. The electronic device may plan, in the area specified in the map information, at least one route matching the route shape. Further, the electronic device may navigate the planned route for the user in real time, so that the user can do a workout under the guidance of the navigation, and this ensures that a final workout route shape matches a route shape of the planned route.

104. The electronic device recommends the at least one route to a user of the electronic device.

In this embodiment of the present invention, the electronic device may recommend the at least one route to the user of the electronic device in multiple manners, for example, by means of voice, text, or map display. This is not limited in this embodiment of the present invention.

Referring to FIG. 1.1a and FIG. 1.1b, FIG. 1.1a is a graphical user interface of an electronic device according to an embodiment of the present invention, and FIG. 1.1b is another graphical user interface of an electronic device according to an embodiment of the present invention. As shown in FIG. 1.1a, the graphical user interface of the electronic device is divided into a first display area and a second display area. The first display area includes two option boxes for route shape planning: a "manual input" option box and a "graphic library" option box. The "manual input" option box is used to enable a function of manually entering a route shape. The "graphic library" option box is used to enable a selection function of a graphic library. The second display area may display map information specified by the user. As shown in FIG. 1.1a, after the user taps the "manual input" option box, the first display area is switched to an input interface shown in FIG. 1.1b. The user may manually enter a route shape on the input interface. When the user enters a letter "Z" on the input interface, a route matching the letter "Z" is mapped in the second display area, for example, a route marked in FIG. 1.1b.

Referring to FIG. 1.2a and FIG. 1.2b, FIG. 1.2a is another graphical user interface of an electronic device according to an embodiment of the present invention, and FIG. 1.2b is another graphical user interface of an electronic device according to an embodiment of the present invention. As shown in FIG. 1.2a, the graphical user interface of the electronic device is divided into a first display area and a second display area. The first display area includes two option boxes for route shape planning: a "manual input" option box and a "graphic library" option box. The "manual input" option box is used to enable a function of manually entering a route shape. The "graphic library" option box is used to enable a selection function of a graphic library. The second display area may display map information specified by the user. As shown in FIG. 1.2a, when the user taps the "graphic library" option box, the first display area is switched to a graphical interface shown in FIG. 1.2b. The graphical interface includes multiple graphics. The user may select a graphic on the graphical interface as a route shape. When the user selects a graphic "U" on the graphical interface, a route matching the graphic "U" is mapped in the second display area, for example, a route marked in FIG. 1.2b.

In another optional implementation, the route recommendation method may further include the following step:
obtaining a specified workout parameter.

In the optional implementation, the workout parameter may include but is not limited to: a workout type, a workout distance, workout duration, and workout calories (that is, calories consumed in a workout). The workout type may include but is not limited to: walking, running, cycling, motorcycling, skateboarding, driving, and shipping.

Specifically, the electronic device may obtain the specified workout parameter by entering a workout parameter by the user. Alternatively, the electronic device may determine the workout parameter according to historical workout data and/or a preset rule (in which a workout amount, a workout form, or the like is regularly adjusted).

Referring to FIG. 1.3a and FIG. 1.3b, FIG. 1.3a is another graphical user interface of an electronic device according to an embodiment of the present invention, and FIG. 1.3b is another graphical user interface of an electronic device according to an embodiment of the present invention. As shown in FIG. 1.3a, the graphical user interface of the electronic device is divided into a first display area and a second display area. The first display area includes two option boxes for route shape planning: a "manual input" option box and a "graphic library" option box. The "manual input" option box is used to enable a function of manually entering a route shape. The "graphic library" option box is used to enable a selection function of a graphic library. In addition, the first display area may further include a workout parameter. The workout parameter includes multiple option boxes, for example, a "workout type" option box, a "workout distance" option box, a "workout duration" option box, and a "workout calorie" option box. The second display area may display map information specified by the user. As shown in FIG. 1.3a, after the user taps the "graphic library" option box and the "workout distance" option box in the first display area, the first display area is switched to a graphic and distance selection interface shown in FIG. 1.3b. On the graphic and distance selection interface, the user selects a graphic "U" and a workout distance "5 kilometers". After the user determines the graphic and the workout distance, a route that matches the graphic "U" and meets the workout distance "5 kilometers" is mapped in the second display area, for example, a route marked in FIG. 1.3b. In FIG. 1.2a and FIG. 1.2b and in FIG. 1.3a and FIG. 1.3b, positions of the first display area and the second display area may be distributed in an up down manner; or the first area is located in the second area, for example, a "graphic library"/"manual input" key or an input window is set on a map interface; or another possible implementation exists.

The optional step may be performed before step 101, or may be performed after step 101 and before step 102, or may be performed after step 102 and before step 103. This is not limited in this embodiment of the present invention.

Specifically, a manner in which the electronic device determines, if the specified map information includes route information, whether the route information includes at least one route matching the route shape may be specifically:
if the specified map information includes route information, determining whether the route information includes at least one route that matches the route shape and meets the workout parameter.

In the optional implementation, the electronic device needs to determine whether the route information includes a route matching the route shape, and determine whether the route information includes a route that meets the workout parameter. The electronic device recommends, to the user, only a route that meets both of the two conditions.

In another optional implementation, after step 104, the route recommendation method may further include the following steps:
(11) The electronic device maps the at least one route in the map information.
(12) The electronic device determines a target route from the mapped at least one route according to a preset rule or user selection.
(13) The electronic device records a workout track of the user.

In the optional implementation, after the electronic device determines the matched at least one route, the electronic device may map the at least one route in the map information, further determine the target route from the mapped at least one route according to the preset rule or the user selection, and record the workout track of the user.

Optionally, the electronic device may further correct the recorded workout track. Generally, the recorded workout track is recorded according to an actual workout route of the user. There may be a difference between the workout track and a specified workout route to some extent. After the electronic device corrects the recorded workout track, the recorded workout track can better match the specified workout route shape, so that a presented workout track is better-looking, and user experience is improved. Specifically, that the workout track matches the specified workout route shape may be understood as follows: A matching degree between the workout track and the specified route shape is greater than a preset matching degree, for example, 80%.

In the optional implementation, a manner in which the electronic device determines a target route from the mapped at least one route according to a preset rule or user selection may be specifically:
for each mapped route, obtaining an air quality index of an area to which the route belongs, and determining, from the at least one route, a route with a minimum air quality index as the target route according to all the air quality indexes; or
for each mapped route, obtaining people flow information of the route, and determining, from the at least one route, a route with minimum people flow as the target route according to all the people flow information; or
receiving a selection instruction for any one of the mapped at least one route, and determining a selected route as the target route, so as to respond to the selection instruction.

In the optional implementation, for each mapped route, the electronic device may obtain, by means of network query, the air quality index of the area to which the route belongs. The air quality index (AQI, Air Quality Index) is a dimensionless index that quantitatively describes an air quality status. A larger AQI value, a higher level and category, and a deeper representation color indicate more serious air pollution and greater harm to human health. After the electronic device obtains the air quality indexes of all the routes, the electronic device may determine, from the at least one route, the route with the minimum air quality index as the target route, so that the user can do a workout in a route with relatively good air quality, and user experience is improved.

Alternatively, for each mapped route, the electronic device may send a people flow information obtaining request to a monitoring system installed in the route, so as to trigger the monitoring system to send, to the electronic device, people flow information obtained by performing monitoring in the route. After the electronic device obtains people flow in all the routes, the electronic device may determine, from the at least one route, the route with the minimum people flow as the target route, so that the user may not need to worry that a workout is affected because the route is crowded with people, and user experience is improved.

Alternatively, the user may directly perform selection in the mapped at least one route, and the electronic device determines a route selected by the user as the target route, so that a requirement of the user for a personalized route is better met, and user experience is improved.

It should be noted that the graphical user interface of the electronic device provided in FIG. 1.1, FIG. 1.2, and FIG. 1.3 imposes no limitation in this embodiment of the present invention. The graphical user interface of the electronic device may have only one display area. If there is only one display area, the electronic device may first output a user interface used by the user to specify a route shape and a workout parameter, then output specified map information, and map, in the specified map information, at least one route matching the specified route shape. For example, by using a menu, a menu or a key is provided for the user to specify the route shape and the workout parameter. After the menu or the key is selected, a configuration interface is displayed, so that the user can specify the route shape, or set/select the workout parameter. Alternatively, another graphical user interface (graphical user interface, GUI) design solution in the art may be used, so that the user can specify the route shape and obtain another required parameter. This is not limited in the present invention. In addition, before step 204, any user may further set an additional route limitation condition, for example, avoiding an intersection/a building/a road, or passing by a building.

In a method procedure described in FIG. 1, the electronic device may obtain the specified route shape and the specified map information, and determine at least one route that is in the map information and matches the route shape. In this way, the electronic device can recommend the at least one route to the user. It may be learned that, according to this embodiment of the present invention, before the user starts to do a workout, the electronic device may obtain a route shape specified by the user in the workout app, and recommend, to the user according to the route shape and map information, a personalized workout route that meets the route shape. If the user does a workout according to the recommended personalized route, after the user completes the workout, the workout app generates a workout route shape matching the route shape. In this way, a requirement of the user for a personalized workout route shape can be met, and in addition, a workout interest is improved, a desire for sharing can be improved, and the user is motivated to exercise more.

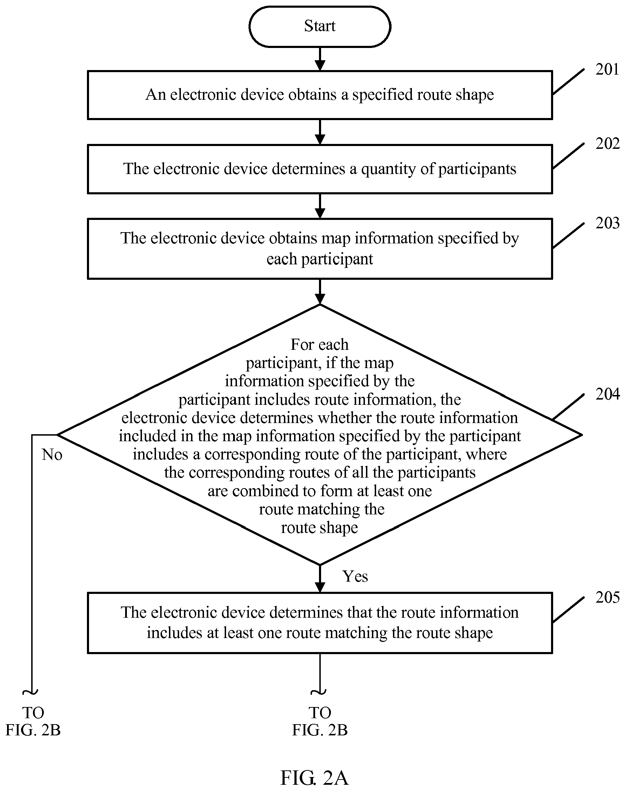

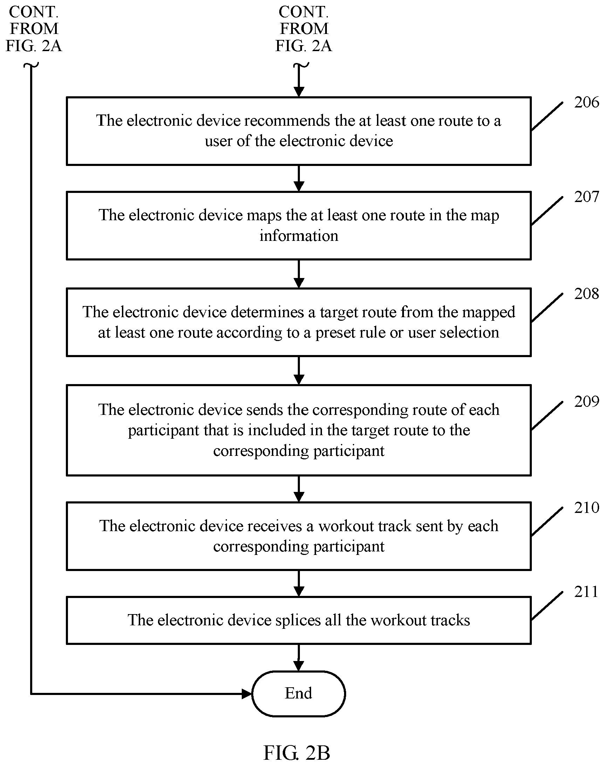

Referring to FIG. 2A and FIG. 2B, FIG. 2A and FIG. 2B are schematic flowcharts of another route recommendation method according to an embodiment of the present invention. The route recommendation method is applied to an electronic device. As shown in FIG. 2A and FIG. 2B, the method may include the following steps.

201. The electronic device obtains a specified route shape.

202. The electronic device determines a quantity of participants.

In this embodiment of the present invention, multiple participants may jointly complete a route. Therefore, before doing a workout, a user may enter, on the electronic device in advance, a quantity of participants that participate in the workout, for example, two, three, or five.

Optionally, step 202 may be performed before step 201.

203. The electronic device obtains map information specified by each participant.

In this embodiment of the present invention, the map information specified by each participant is map information of an area in which each participant wants to do a workout. The map information specified by all the participants may be the same or different. For example, if all the participants are in a same city, the map information specified by all the participants may be the same. Alternatively, if all the participants are in different cities, the map information specified by all the participants may be different. For example, if a participant A, a participant B, and a participant C are all in Shenzhen, map information specified by the participant A, map information specified by the participant B, and map information specified by the participant C may all be map information of Shenzhen. For another example, if a participant A is in Beijing, a participant B is in Shanghai, and a participant C is in Shenzhen, map information specified by the participant A may be map information of Beijing, map information specified by the participant B may be map information of Shanghai, and map information specified by the participant C may be map information of Shenzhen.

204. For each participant, if the map information specified by the participant includes route information, the electronic device determines whether the route information included in the map information specified by the participant includes a corresponding route of the participant, where the corresponding routes of all the participants are combined to form at least one route matching the route shape; and if the route information includes the corresponding route of the participant, step 205 is performed; or if the route information does not include the corresponding route of the participant, the procedure ends.

In this embodiment of the present invention, because multiple participants jointly complete a route, each participant needs to complete a part of the route, that is, a sub-route of the route. Each sub-route is corresponding to a sub-route shape.

Optionally, for each participant, if the map information specified by the participant includes route information, the electronic device may first determine whether the route information included in the map information specified by the participant includes a corresponding route of the participant that matches a sub-route shape in the specified route shape, where the corresponding routes of all the participants are combined to form at least one route matching the route shape. If the route information includes the corresponding route of the participant that matches a sub-route shape in the specified route shape, the electronic device determines that the route information includes at least one route matching the route shape. The corresponding routes of all the participants are different. The corresponding route may be understood as a sub-route in a route matching the route shape. For example, it is assumed that there are three participants in total: a participant A, a participant B, and a participant C, and a corresponding route of the participant A is a corresponding route 1, a corresponding route of the participant B is a corresponding route 2, and a corresponding route of the participant C is a corresponding route 3. The corresponding route 1, the corresponding route 2, and the corresponding route 3 are combined to form a route L. The route L matches the specified route shape. Apparently, the corresponding route 1, the corresponding route 2, and the corresponding route 3 may be considered as three different sub-routes of the route L.

Optionally, the electronic device may divide the specified route shape according to the quantity of participants, so as to obtain multiple sub-route shapes. Further, for each participant, the electronic device determines whether the route information included in the map information specified by the participant includes a corresponding route of the participant that matches a sub-route shape. The corresponding routes of all the participants are different. If the route information includes the corresponding route of the participant that matches a sub-route shape, the electronic device determines that the route information includes at least one route matching the route shape. In an optional implementation, the route recommendation method may further include the following step:
determining a workout parameter specified by each participant and/or determining a route completion proportion specified by each participant.

In the optional implementation, each participant may further specify a workout parameter. The workout parameter may include but is not limited to: a workout type, a workout distance, workout duration, and workout calories (that is, calories consumed in a workout). The workout type may include but is not limited to: walking, running, cycling, motorcycling, skateboarding, driving, and shipping. The corresponding route of the participant includes a route that is in the route information included in the map information specified by the participant and that meets the workout parameter specified by the participant. That is, the corresponding route of each participant needs to meet the workout parameter specified by the participant. In addition, the corresponding routes of all the participants need to be combined to form at least one route matching the route shape.

In an optional implementation, each participant may specify a completion proportion, for example, a proportion of a route length completed by the participant to a total route length, a proportion (based on an average workout speed in a historical workout record of each participant, or a workout speed entered by the participant, or planned workout duration, or the like) of duration used by the participant to duration for completing a total route. For example, there are in total three participants A, B, and C. A proportion of a route completed by the participant A to the total route is 1/2, and a proportion of a route completed by each of the participant B and the participant C to the total route is 1/4. The corresponding route of the participant includes a route that is in the route information included in the map information specified by the participant and that meets the completion proportion specified by the participant. That is, the corresponding route of each participant needs to meet the completion proportion specified by the participant. In addition, the corresponding routes of all the participants need to be combined to form at least one route matching the route shape.

205. The electronic device determines that the route information includes at least one route matching the route shape.

206. The electronic device recommends the at least one route to a user of the electronic device.

207. The electronic device maps the at least one route in the map information.

208. The electronic device determines a target route from the mapped at least one route according to a preset rule or user selection.

In this embodiment of the present invention, the target route includes the corresponding route of each participant, that is, the target route includes a sub-route that needs to be completed by each participant.

Specifically, a manner in which the electronic device determines a target route from the mapped at least one route according to a preset rule or user selection may be specifically:
for each mapped route, obtaining an air quality index of an area to which the route belongs, and determining, from the at least one route, a route with a minimum air quality index as the target route according to all the air quality indexes; or
for each mapped route, obtaining people flow information of the route, and determining, from the at least one route, a route with minimum people flow as the target route according to all the people flow information; or
receiving a selection instruction for any one of the mapped at least one route, and determining a selected route as the target route, so as to respond to the selection instruction.

For related description of step 208, refer to the description of step (12) in the optional implementation in the method embodiment described in FIG. 1.

Optionally, if the map information specified by all the participants is the same, the electronic device may divide the target route according to the obtained quantity of participants after determining the target route. In this way, there is no need to divide all routes.

209. The electronic device sends the corresponding route of each participant that is included in the target route to the corresponding participant.

In this embodiment of the present invention, that the electronic device sends the corresponding route of each participant that is included in the target route to the corresponding participant may be understood as follows: The electronic device sends the corresponding route of each participant that is included in the target route to a device of the corresponding participant. The corresponding participant may be understood as a participant corresponding to a corresponding route. For example, it is assumed that there are in total three participants: a participant A, a participant B, and a participant C. Routes planned by the electronic device for the three participants are respectively as follows: A corresponding route of the participant A is a sub-route 1, a corresponding route of the participant B is a sub-route 2, and a corresponding route of the participant C is a sub-route 3. The sub-route 1, the sub-route 2, and the sub-route 3 are combined to form the target route matching the specified route shape. After determining the target route, the electronic device may send the sub-route 1 to a participant corresponding to the sub-route 1, that is, the participant A; the electronic device may send the sub-route 2 to a participant corresponding to the sub-route 2, that is, the participant B; and the electronic device may send the sub-route 3 to a participant corresponding to the sub-route 3, that is, the participant C. The electronic device for route planning may be any one of electronic devices used by the participants A, B, and C, or may be an independent device other than devices of the participants.

A workout app is installed on the device of each participant. For the device of each participant, after the device of the participant receives the corresponding route that is corresponding to the participant and that is sent by the electronic device, the device of the participant records a workout track of the participant by using the workout app.

Referring to FIG. 2.1a and FIG. 2.1b, FIG. 2.1a is another graphical user interface of an electronic device according to an embodiment of the present invention, and FIG. 2.1b is another graphical user interface of an electronic device according to an embodiment of the present invention. As shown in FIG. 2.1a, the graphical user interface of the electronic device is divided into a first display area and a second display area. The first display area includes two option boxes for route shape planning: a "manual input" option box and a "graphic library" option box. The "manual input" option box is used to enable a function of manually entering a route shape. The "graphic library" option box is used to enable a selection function of a graphic library. In addition, the first display area may further include an option box of a participant quantity. The user may select a participant quantity provided by a system, or enter a participant quantity in a customized manner. The second display area may display map information specified by the user. As shown in FIG. 2.1a, after the user taps the "manual input" option box and a participant quantity "three", the first display area is switched to an input interface shown in FIG. 2.1b. The user may manually enter a route shape on the input interface. When the user enters a letter "Z" on the input interface, a route matching the letter "Z" is mapped in the second display area, for example, a route marked in FIG. 2.1b. It should be noted that FIG. 2.1a and FIG. 2.1b show a case in which map information specified by all participants are the same. In addition, the first display area may further include another configuration option, for example, a workout parameter (a workout type, workout duration, a workout distance, and the like) and matching precision.

Referring to FIG. 2.2a to FIG. 2.2d, each of FIG. 2.1a to FIG. 2.2d is another graphical user interface of an electronic device according to an embodiment of the present invention. A route A shown in FIG. 2.2a is a target route determined by the electronic device. The electronic device divides the route A into three sub-routes according to a participant quantity "three": a sub-route 1 shown in FIG. 2.2b, a sub-route 2 shown in FIG. 2.2c, and a sub-route 3 shown in FIG. 2.2d. After completing the division, the electronic device may send the sub-route 1 to a participant A corresponding to the sub-route 1, send the sub-route 2 to a participant B corresponding to the sub-route 2, and send the sub-route 3 to a participant C corresponding to the sub-route 3.

210. The electronic device receives a workout track sent by each corresponding participant.

In this embodiment of the present invention, after each participant completes the corresponding route planned for the participant, the device of the participant may send the recorded workout track to the electronic device. In this way, the electronic device may receive the workout track sent by each corresponding participant.

Optionally, a workout sub-route shape may be sent to an electronic device of a corresponding route in real time while a participant does a workout, so that the electronic device splices workout tracks of all participants.

211. The electronic device splices all the workout tracks.

In this embodiment of the present invention, after the electronic device receives the workout track sent by each corresponding participant, the electronic device may splice all the workout tracks.

Optionally, the electronic device may further correct a workout track obtained by means of splicing. Generally, a recorded workout track is recorded according to an actual workout route of the user. There may be a difference between the workout track obtained by means of splicing and a specified workout route to some extent. After the electronic device corrects the workout track obtained by means of splicing, the workout track obtained by means of splicing can match the specified workout route shape. Specifically, that the workout track obtained by means of splicing matches the specified workout route shape may be understood as follows: A matching degree between the workout track obtained by means of splicing and the specified route shape is greater than a preset matching degree, for example, 80%.

In another optional implementation, after step 211, the method may further include the following step:
sending, by the electronic device, the workout track of each participant and/or a workout route shape to all the participants.

In the optional implementation, all the participants may receive the workout track of each participant and/or the workout route shape that are/is sent by the electronic device. In this way, all the participants may view not only their respective workout tracks (or may view the workout track of each participant) but also the workout route shape that is obtained by means of splicing and is jointly completed by all the participants.

It should be noted that performing of steps 210 and 211 is only an embodiment. In another embodiment, steps 210 and 211 do not need to be performed. Instead, the workout track of each participant and the route (that is, a route that needs to be completed by all the participants) matching the specified route shape are displayed on a user interface of the device of the participant. The workout track and the route may be discriminatively displayed by using different colors, different brightness, different lines, or in another manner, so that a viewer can identify not only a workout track completed by the participant but also a whole workout shape and contribution of the participant to the whole shape. In this way, each participant concerns only a workout status of the participant and contribution of the participant to the specified route, and does not concern a completion status of another participant. Certainly, the electronic device may also support the two embodiments. Each participant may view not only a real-time workout track of the participant but also the real-time workout tracks of all the participants. The user may view by means of selection or switching.

In a method procedure described in FIG. 2A and FIG. 2B, the multiple participants may jointly complete the route matching the specified route shape. In this way, not only a personalized route shape expected by the user may be easier to implement, but also a team spirit of the user may be triggered to promote the user to keep doing a workout, and motivate the user to exercise more to improve health.

Referring to FIG. 3A and FIG. 3B, FIG. 3A and FIG. 3B are schematic flowcharts of another route recommendation method according to an embodiment of the present invention. The route recommendation method is applied to an electronic device. As shown in FIG. 3A and FIG. 3B, the method may include the following steps.

301. The electronic device obtains a specified route shape.

302. The electronic device obtains specified map information.

303. The electronic device obtains a specified workout parameter.

In this embodiment of the present invention, the workout parameter may include a workout type, a workout distance, workout duration, and workout calories (that is, calories consumed in a workout). Steps 301, 302, and 303 may be simultaneously performed, or may be successively performed in any sequence. This is not limited in this embodiment of the present invention.

304. If the specified map information includes route information, the electronic device determines whether the route information includes at least one route that matches the route shape and meets with the workout parameter; and if the route information includes at least one route that matches the route shape and meets the workout parameter, step 305 is performed; or if the route information does not include at least one route that matches the route shape and meets the workout parameter, the procedure ends.

305. The electronic device obtains a specified quantity of sub-routes.

In this embodiment of the present invention, a user may do a workout multiple times to complete a route matching the specified route shape. A route in each time of workout may be considered as a sub-route.

In this embodiment of the present invention, a quantity of sub-routes may be specified by the user, or may be specified by the electronic device by means of recommendation. The specified quantity of sub-routes may be two, three, five, or the like.

306. The electronic device divides each of the matched at least one route into multiple (at least two) sub-routes whose quantity matches the specified quantity of sub-routes.

In this embodiment of the present invention, route lengths of sub-routes in all times of workout may be the same or different. Time intervals between all the times of workout may be the same or different. The sub-routes in all the times of workout may be physically connected or may not be physically connected. This is not limited in this embodiment of the present invention. The user may specify these parameters.

In an optional implementation, steps 305 and 306 may be replaced with the following action: The electronic device divides each of the matched at least one route according to a specified parameter, so as to obtain multiple sub-routes. Specifically, the electronic device may perform sub-route division according to stored user data, for example, according to average workout intensity, or in a mode in which workout intensity is gradually increased, in an enhancement mode in which workout intensity is greater than average workout intensity by a ratio, or in a recovery mode. For example, if a total length of a matched route 1 is 16 kilometers, and a system considers by default that workout is done according to the average workout intensity and the user does not make a change, the electronic device divides the route 1 according to the average workout intensity parameter. It is assumed that previous average workout intensity of a participant is 4 kilometers per day. In this case, the electronic device may obtain four sub-routes by means of division. Alternatively, recommendation is performed according to a general criterion of a corresponding workout. For example, an entry-level route length for running is less than or equal to 3 kilometers in each time of workout, an advanced-level route length for running is 3 to 6 kilometers in each time of workout, and a top-level route length for running is at least 10 kilometers in each time of workout. In addition, according to a level selected by a system or specified by the user, each of the matched at least one route is divided according to an entry-level parameter, so as to determine the quantity of sub-routes. For example, if a total length of a matched route 2 is 20 kilometers, and the user specifies an entry level, the electronic device may obtain seven sub-routes by means of division. In each embodiment of this specification, sub-route division may have a precision tolerance value, for example, ±1 kilometer.

In an optional implementation, step 303 may be performed after step 305 and before step 306. In this case, step 304 is changed as follows: If the specified map information includes route information, the electronic device determines whether the route information includes at least one route matching the route shape; and if the route information includes at least one route matching the route shape, step 305 is performed; or if the route information does not include at least one route matching the route shape, the procedure ends. Step 306 is specifically as follows: The electronic device divides each of the at least one route into multiple sub-routes whose quantity matches the specified quantity of sub-routes and that meet the specified workout parameter. In addition, in an optional implementation, step 303 may not be performed, that is, the user does not set a workout parameter. A constraint condition considered when the electronic device performs route matching in step 304 does not include the workout parameter.

307. The electronic device maps the at least one route in the map information, where sub-route information may be displayed in the mapped route.

308. The electronic device determines a target route from the mapped at least one route according to a preset rule or user selection.

In this embodiment of the present invention, the target route determined by the electronic device includes multiple sub-routes. A quantity of the multiple sub-routes is the specified quantity of sub-routes. This step is the same as step 208. Details are not described herein again.

Optionally, the electronic device may divide the target route according to the obtained specified quantity of sub-routes after determining the target route. In this way, there is no need to divide all the routes.

309. The electronic device records a workout track of a user.

In this embodiment of the present invention, each time the user does a workout, the electronic device may record, by using a workout app, a workout track of a sub-route obtained each time the user does a workout.

Optionally, after step 309, the electronic device may display a workout track in each time of workout in the specified map information by using a different color or a line with different thickness. Alternatively, the electronic device may splice all workout tracks, and then display a workout track, obtained by means of splicing, in the specified map information by using different colors or lines with different thickness. In this way, the user can not only identify the track in each time of workout, but also view the workout track obtained by means of splicing after multiple times of workout.

The electronic device may splice all workout tracks after recording all sub-routes obtained after the user does a workout; or the electronic device may record a workout track in real time and perform real-time splicing.

Optionally, the electronic device may further provide services for the user according to a planned route, for example, navigation, performing reminding before a workout, and reporting actual completion progress.

In addition, before step 304, the user may further set an additional route limitation condition for any sub-route, for example, avoiding (in some day) an intersection/a building/a road, or passing by (in some day) a building/a shopping mall, and consider the limitation condition when step 304 is performed.

Referring to FIG. 3.1a and FIG. 3.1b, FIG. 3.1a is another graphical user interface of an electronic device according to an embodiment of the present invention, and FIG. 3.1b is another graphical user interface of an electronic device according to an embodiment of the present invention. As shown in FIG. 3.1a, the graphical user interface of the electronic device is divided into a first display area and a second display area. The first display area includes two option boxes for route shape planning: a "manual input" option box and a "graphic library" option box. The "manual input" option box is used to enable a function of manually entering a route shape. The "graphic library" option box is used to enable a selection function of a graphic library. In addition, the first display area may further include a workout parameter. The workout parameter includes multiple option boxes, for example, a "workout type" option box, a "workout distance" option box, a "workout duration" option box, a "workout calorie" option box, and a "sub-route quantity" option box. The second display area may display map information specified by the user. As shown in FIG. 3.1a, after the user taps the "graphic library" option box and the "sub-route quantity" option box, the first display area is switched to a graphical interface shown in FIG. 3.1b. The graphical interface includes multiple graphics. The user may select a graphic on the graphical interface as a route shape. When the user selects a graphic "U" on the graphical interface, the graphical interface outputs multiple options of a sub-route quantity, such as "two", "three", and "five" shown in FIG. 3.1b. In addition, the user may further customize the sub-route quantity. After the user taps an option "three", a route that matches the graphic "U" and whose sub-route quantity is the quantity of sub-routes that is specified by the user is mapped in the second display area, for example, a route marked in FIG. 3.1b.

Referring to FIG. 3.2a to FIG. 3.2d, each of FIG. 3.2a to FIG. 3.2d is another graphical user interface of an electronic device according to an embodiment of the present invention. As shown in FIG. 3.2a to FIG. 3.2c, the user completes a route by doing a workout three times. A route in each time of workout is a sub-route, that is, a sub-route 1 shown in FIG. 3.2a, a sub-route 2 shown in FIG. 3.2b, and a sub-route 3 shown in FIG. 3.2c. The workout app of the electronic device records a workout track obtained each time the user does a workout. After the three times of workout are completed, the electronic device splices the workout tracks in the three times of workout, to obtain a workout track that is shown in FIG. 3.2d and that matches the specified route shape.

It should be noted that FIG. 3.1a to FIG. 3.1b and FIG. 3.2a to FIG. 3.2d show only a graphical user interface of an electronic device disclosed in this embodiment of the present invention. As described in the foregoing embodiment, another graphical user interface may be used to perform human-machine interaction.

In a method procedure described in FIG. 3A and FIG. 3B, the user may individually complete a complex specified route shape by means of multiple times of workout, and the following problem is resolved: A workout track is undiversified and lacks variety because of limitations such as an individual workout amount and a fixed road. Therefore, a workout interest is improved, and workout enthusiasm of the user is enhanced.

Referring to FIG. 4, FIG. 4 is a schematic structural diagram of an electronic device according to an embodiment of the present invention. The electronic device is configured to execute the route recommendation method disclosed in FIG. 1. The electronic device may include a first obtaining unit 401, a second obtaining unit 402, a determining unit 403, and a recommendation unit 404.

The first obtaining unit 401 is configured to obtain a specified route shape.

The second obtaining unit 402 is configured to obtain specified map information.

The determining unit 403 is configured to determine at least one route that is in the map information and matches the route shape.

Optionally, a manner in which the determining unit 403 determines at least one route that is in the map information and matches the route shape is specifically:
if the specified map information does not include route information, planning, in an area specified in the map information, at least one route matching the route shape.

The recommendation unit 404 is configured to recommend the at least one route to a user of the electronic device.

Referring to FIG. 5, FIG. 5 is a schematic structural diagram of another electronic device according to an embodiment of the present invention. The electronic device shown in FIG. 5 is configured to execute the route recommendation method disclosed in FIG. 1. The electronic device shown in FIG. 5 is obtained by further optimizing the electronic device shown in FIG. 4. In comparison with the electronic device shown in FIG. 4, the electronic device shown in FIG. 5 includes all the units of the electronic device shown in FIG. 4, and in addition, the determining unit 403 may include:
a judging sub-unit 4031, configured to determine, if the specified map information includes route information, whether the route information includes at least one route matching the route shape; and
a determining sub-unit 4032, configured to: when the judging sub-unit determines, if the specified map information includes route information, that the route information includes at least one route matching the route shape, determine the at least one route.

Optionally, the electronic device shown in FIG. 5 may further include:
a third obtaining unit 405, configured to obtain a specified workout parameter.

The judging sub-unit 4031 is specifically configured to: if the specified map information includes route information, determine whether the route information includes at least one route that matches the route shape and meets the workout parameter.

Optionally, the electronic device shown in FIG. 5 may further include:
a first mapping unit 406, configured to map the at least one route in the map information, where
the determining unit 403 is further configured to determine a target route from the mapped at least one route according to a preset rule or user selection; and
a first recording unit 407, configured to record a workout track of the user.

Referring to FIG. 6, FIG. 6 is a schematic structural diagram of another electronic device according to an embodiment of the present invention. The electronic device shown in FIG. 6 is configured to execute the route recommendation method disclosed in FIG. 2A and FIG. 2B. The electronic device shown in FIG. 6 is obtained by further optimizing the electronic device shown in FIG. 4. In comparison with the electronic device shown in FIG. 4, the electronic device shown in FIG. 6 includes all the units of the electronic device shown in FIG. 4, and in addition, the determining unit 403 may include:
a judging sub-unit 4031, configured to determine, if the specified map information includes route information, whether the route information includes at least one route matching the route shape; and
a determining sub-unit 4032, configured to: when the judging sub-unit determines, if the specified map information includes route information, that the route information includes at least one route matching the route shape, determine the at least one route.

The determining sub-unit 4032 is further configured to determine at least one participant.

The second obtaining unit 402 is specifically configured to obtain map information specified by each participant.

The judging sub-unit 4031 is specifically configured to: for each participant, if the map information specified by the participant includes route information, determine whether the route information included in the map information specified by the participant includes a corresponding route of the participant, where the corresponding routes of all the participants are combined to form at least one route matching the route shape; and if the route information includes the corresponding route of the participant, determine that the route information includes at least one route matching the route shape.

Optionally, the determining sub-unit 4032 is further configured to determine a workout parameter specified by each participant, where the corresponding route of the participant includes a route that is in the route information included in the map information specified by the participant and that meets the workout parameter specified by the participant.

Optionally, the electronic device shown in FIG. 6 may further include:
a second mapping unit 408, configured to map the at least one route in the map information, where
the determining unit 403 is further configured to determine a target route from the mapped at least one route according to a preset rule or user selection, where the target route includes the corresponding route of each participant;
a sending unit 409, configured to send the corresponding route of each participant that is included in the target route to the corresponding participant;
a receiving unit 410, configured to receive a workout track sent by each corresponding participant; and
a splicing unit 411, configured to splice all the workout tracks.

Referring to FIG. 7, FIG. 7 is a schematic structural diagram of another electronic device according to an embodiment of the present invention. The electronic device shown in FIG. 7 is configured to execute the route recommendation method disclosed in FIG. 3A and FIG. 3B. The electronic device shown in FIG. 7 is obtained by further optimizing the electronic device shown in FIG. 4. In comparison with the electronic device shown in FIG. 4, the electronic device shown in FIG. 7 includes all the units of the electronic device shown in FIG. 4, and in addition, the determining unit 403 may include:
a judging sub-unit 4031, configured to determine, if the specified map information includes route information, whether the route information includes at least one route that matches the route shape and meets a workout parameter; and
a determining sub-unit 4032, configured to: when the judging sub-unit determines, if the specified map information includes route information, that the route information includes at least one route matching the route shape, determine the at least one route.

A third obtaining unit 405 is configured to obtain the specified workout parameter.

The third obtaining unit 405 is further configured to obtain a specified quantity of sub-routes.

A division unit 412 is configured to divide each of the at least one route into multiple sub-routes whose quantity matches the specified quantity of sub-routes.

Optionally, the electronic device shown in FIG. 7 may further include a third mapping unit 413 and a second recording unit 414.

The third mapping unit 413 is configured to map the at least one route in the map information.

The determining unit 403 is further configured to determine a target route from the mapped at least one route according to a preset rule or user selection, where the target route includes multiple sub-routes.

Specifically, a manner in which the determining unit 403 determines a target route from the mapped at least one route according to a preset rule or user selection is specifically:
for each mapped route, obtaining an air quality index of an area to which the route belongs, and determining, from the at least one route, a route with a minimum air quality index as the target route according to all the air quality indexes; or
for each mapped route, obtaining people flow information of the route, and determining, from the at least one route, a route with minimum people flow as the target route according to all the people flow information; or
receiving a selection instruction for any one of the mapped at least one route, and determining a selected route as the target route, so as to respond to the selection instruction.

The second recording unit 414 is configured to record a workout track of the user.

In the electronic device 400 described in FIG. 4 to FIG. 7, the first obtaining unit 401 may obtain the specified route shape, the second obtaining unit 402 obtains the specified map information, and the determining unit 403 determines at least one route that is in the map information and matches the route shape. In this way, the recommendation unit 404 can recommend the at least one route to the user. It may be learned that, according to this embodiment of the present invention, before the user starts to do a workout, the first obtaining unit 401 may obtain a route shape specified by the user in a workout app, and the recommendation unit 404 may recommend, to the user according to the route shape and map information, a personalized workout route that meets the route shape. If the user does a workout according to the recommended personalized route, after the user completes the workout, the workout app generates a workout route shape matching the route shape. In this way, a requirement of the user for a personalized workout route shape can be met, and in addition, the user is motivated to exercise more, and a desire for sharing is improved.

Referring to FIG. 8, FIG. 8 is a schematic structural diagram of another electronic device according to an embodiment of the present invention. The electronic device shown in FIG. 8 is configured to execute the route recommendation method disclosed in the embodiments of the present invention. As shown in FIG. 8, the electronic device 800 may include at least one processor 801 such as a CPU (Central Processing Unit, central processing unit), at least one input apparatus 802, at least one output apparatus 803, a memory 804, and a communications bus 805. A person skilled in the art may understand that a structure of the electronic device 800 shown in FIG. 8 does not constitute a limitation on the present invention. The structure may be a bus structure, or a star structure; or may include components more or fewer than those shown in FIG. 8, for example, a communications component, configured to implement functions such as communicating with another electronic device and accessing a network, or a locating component, configured to obtain map information and provide a service such as navigation for a user; or may combine some components; or may have different component arrangements. The input apparatus 802 may be an apparatus that can implement input, for example, a touchscreen, a voice input apparatus, a keyboard, a mouse, or a handwriting tablet. The output apparatus 803 may be an apparatus that can enable the user to receive a result output of the electronic device, for example, a display, a loudspeaker, or a projector.

The memory 804 is configured to store a software program and a module. The processor 801 performs various function applications of a user terminal and implements data processing by running the software program and the module that are stored in the memory 804. The memory 804 mainly includes a program storage area and a data storage area. The program storage area may store an operating system, and an application program required by at least one function, for example, a sound playing program or an image playing program. The data storage area may store data (such as audio data or a phone book) created according to use of the electronic device, and the like. In a specific implementation of the present invention, the memory 804 may include a volatile memory, such as a nonvolatile random access memory (Nonvolatile Random Access Memory, NVRAM for short), a phase change RAM (Phase Change RAM, PRAM for short), or a magnetoresistive RAM (Magetoresistive RAM, MRAM for short), and may further include a nonvolatile memory, such as at least one magnetic disk storage device, an electrically erasable programmable read-only memory (Electrically Erasable Programmable Read-Only Memory, EEPROM for short), or a flash memory device such as a NOR flash memory (NOR flash memory) or a NAND flash memory (NAND flash memory). The application program includes any application installed on the user terminal, including but not limited to a browser, email, an instant message service, word processing, keyboard virtualization, a widget (Widget), encryption, digital copyright management, speech recognition, speech reproduction, positioning (such as a function provided by a Global Positioning System), and music playback.

The communications bus 805 is configured to implement connection and communication between the components such as the processor 801, the input apparatus 802, the output apparatus 803, and the memory 804. The communications bus 805 may be an industry standard architecture (Industry Standard Architecture, ISA for short) bus, a Peripheral Component Interconnect (Peripheral Component Interconnect, PCI for short) bus, an extended industry standard architecture (Extended Industry Standard Architecture, EISA for short) bus, or the like. The communications bus 805 may be classified into an address bus, a data bus, a control bus, and the like. For ease of representation, only one thick line is used in FIG. 8 to represent the bus, but it does not indicate that there is only one bus or one type of bus.

The processor 801 is a control center of the electronic device 800 and is connected to various parts of the entire electronic device 800 by using various interfaces and lines, and runs or executes the software program and/or the module stored in the memory 804 and invokes data stored in the memory 804 to perform the following operations:
obtaining a specified route shape by using the input apparatus 802;
obtaining specified map information by using the input apparatus 802;
determining at least one route that is in the map information and matches the route shape; and
recommending the at least one route to the user of the electronic device by using the output apparatus 803.

According to this embodiment of the present invention, before the user starts to do a workout, the processor 801 may obtain, by using the input apparatus 802, a route shape specified by the user in a workout app, and recommend, to the user according to the route shape and map information by using the output apparatus 803, a personalized workout route that meets the route shape. If the user does a workout according to the recommended personalized route, after the user completes the workout, the workout app generates a workout route shape matching the route shape. In this way, a requirement of the user for a personalized workout route shape can be met, and in addition, a workout interest is improved, a desire for sharing can be improved, and the user is motivated to exercise more.

Optionally, that the processor 801 determines at least one route that is in the map information and matches the route shape includes:
determining, if the specified map information includes route information, whether the route information includes at least one route matching the route shape; and
if the route information includes at least one route matching the route shape, determining the at least one route.

Optionally, the processor 801 is further configured to invoke program code stored in the memory 804 to perform the following step:
obtaining a specified workout parameter by using the input apparatus 802.

That the processor 801 determines, if the specified map information includes route information, whether the route information includes at least one route matching the route shape includes:
if the specified map information includes route information, determining whether the route information includes at least one route that matches the route shape and meets the workout parameter.

Optionally, the processor 801 is further configured to invoke the program code stored in the memory 804 to perform the following steps:
mapping the at least one route in the map information by using the output apparatus 803;
determining a target route from the mapped at least one route according to a preset rule or user selection; and
recording a workout track of the user.

Optionally, the processor 801 is further configured to invoke program code stored in the memory 804 to perform the following step:
determining at least one participant.

That the processor obtains specified map information by using the input apparatus 802 includes:
obtaining, by using the input apparatus 802, map information specified by each participant.

That the processor 801 determines, if the specified map information includes route information, whether the route information includes at least one route matching the route shape includes:
for each participant, if the map information specified by the participant includes route information, determining whether the route information included in the map information specified by the participant includes a corresponding route of the participant, where the corresponding routes of all the participants are combined to form at least one route matching the route shape; and if the route information includes the corresponding route of the participant, determining that the route information includes at least one route matching the route shape.

Multiple participants may jointly complete the route matching the specified route shape. In this way, not only a personalized route shape expected by the user may be easier to implement, but also a team spirit of the user may be triggered to promote the user to keep doing a workout, and motivate the user to exercise more to improve health.

Optionally, the processor 801 is further configured to invoke the program code stored in the memory 804 to perform the following step:
determining a workout parameter specified by each participant, where the corresponding route of the participant includes a route that is in the route information included in the map information specified by the participant and that meets the workout parameter specified by the participant.

Optionally, the processor 801 is further configured to invoke the program code stored in the memory 804 to perform the following steps:
mapping the at least one route in the map information by using the output apparatus 803;
determining a target route from the mapped at least one route according to a preset rule or user selection, where the target route includes the corresponding route of each participant;
sending the corresponding route of each participant that is included in the target route to the corresponding participant by using the output apparatus 803;
receiving, by using the input apparatus 802, a workout track sent by each corresponding participant; and
splicing all the workout tracks.

Optionally, the processor 801 is further configured to invoke the program code stored in the memory 804 to perform the following steps:
obtaining a specified quantity of sub-routes by using the input apparatus; and
dividing each of the at least one route into multiple sub-routes whose quantity matches the specified quantity of sub-routes.

A complex specified route shape can be individually completed by means of multiple times of workout, and the following problem is resolved: A workout track is undiversified and lacks variety because of limitations such as an individual workout amount and a fixed road. Therefore, a workout interest is improved, and workout enthusiasm of the user is enhanced.

Optionally, the processor 801 is further configured to invoke the program code stored in the memory 804 to perform the following steps:
mapping the at least one route in the map information by using the output apparatus 803;
determining a target route from the mapped at least one route according to a preset rule or user selection, where the target route includes multiple sub-routes; and
recording a workout track of the user.

Optionally, that the processor 801 determines a target route from the mapped at least one route according to a preset rule or user selection includes:
for each mapped route, obtaining, by using the input apparatus 802, an air quality index of an area to which the route belongs, and determining, from the at least one route, a route with a minimum air quality index as the target route according to all the air quality indexes; or
for each mapped route, obtaining people flow information of the route by using the input apparatus 802, and determining, from the at least one route, a route with minimum people flow as the target route according to all the people flow information; or
receiving a selection instruction for any one of the mapped at least one route by using the input apparatus 802, and determining a selected route as the target route, so as to respond to the selection instruction.

Optionally, that the processor 801 determines at least one route that is in the map information and matches the route shape includes:
if the specified map information does not include route information, planning, in an area specified in the map information, at least one route matching the route shape.

Referring to related drawings or corresponding description of the foregoing method embodiments, an embodiment of the present invention discloses a graphical user interface of an electronic device. The electronic device includes a display, an input apparatus, an output apparatus, a memory, and a processor that is configured to execute one or more application programs stored in the memory, and the graphical user interface includes at least two display areas to:
display specified map information in a first display area;
detect an input instruction in a second display area, where the input instruction includes an entered route shape; and
in response to the input instruction, map, in the specified map information, at least one route matching the route shape.

Optionally, when the input instruction further includes an entered workout parameter, the mapping, in the specified map information, at least one route matching the route shape includes:
mapping, in the specified map information, at least one route that matches the route shape and meets the workout parameter.

Optionally, the graphical user interface further includes:
highlighting each of the at least one route by using a different color.

Optionally, the graphical user interface further includes:
in response to a detected selection instruction for a target route in the at least one route, unhighlighting a route other than the target route in the at least one route.

It should be noted that, for brief description, the foregoing method embodiments are represented as a series of actions. However, a person skilled in the art should appreciate that the present invention is not limited to the described order of the actions, because according to this application, some steps may be performed in other orders or simultaneously. It should be further appreciated by a person skilled in the art that the embodiments described in this specification all belong to examples of embodiments, and the involved actions and modules are not necessarily required by this application.

In the foregoing embodiments, the description of each embodiment has respective focuses. For a part that is not described in detail in an embodiment, refer to related description in other embodiments.

A sequence of the steps of the method in the embodiments of the present invention may be adjusted, and steps may also be merged or removed according to an actual need.

Merging, division, and removing may be performed on the units in the embodiments of the present invention according to an actual need.

A person of ordinary skill in the art may understand that all or some of the steps of the methods in the embodiments may be implemented by a program instructing relevant hardware. The program may be stored in a computer readable storage medium. The storage medium may include a flash memory, a read-only memory (Read-Only Memory, ROM), a random access memory (Random Access Memory, RAM), a magnetic disk, an optical disc, or the like.

The route recommendation method, the electronic device, and the graphical user interface provided in the embodiments of the present invention are described in detail above. Specific examples are used in this specification to describe the principles and the implementations of the present invention. The foregoing embodiments are described only to help understand the present invention.

## Claims

1. A route recommendation method, applied to an electronic device, wherein the method comprises:
obtaining a specified route shape;
obtaining specified map information;
determining at least one route that is in the map information and matches the route shape; and
recommending the at least one route to a user of the electronic device.

2. The method according to claim 1, wherein the determining at least one route that is in the map information and matches the route shape comprises:
determining, if the specified map information comprises route information, whether the route information comprises at least one route matching the route shape; and
if the route information comprises at least one route matching the route shape, determining the at least one route.

3. The method according to claim 2, wherein the method further comprises:
obtaining a specified workout parameter; and
the determining, if the specified map information comprises route information, whether the route information comprises at least one route matching the route shape comprises:
if the specified map information comprises route information, determining whether the route information comprises at least one route that matches the route shape and meets the workout parameter.

4. The method according to any one of claims 1 to 3, wherein the method further comprises:
mapping the at least one route in the map information;
determining a target route from the mapped at least one route according to a preset rule or user selection; and
recording a workout track of the user.

5. The method according to claim 2, wherein the method further comprises:
determining at least one participant;
the obtaining specified map information comprises:
obtaining map information specified by each participant; and
the determining, if the specified map information comprises route information, whether the route information comprises at least one route matching the route shape comprises:
for each participant, if the map information specified by the participant comprises route information, determining whether the route information comprised in the map information specified by the participant comprises a corresponding route of the participant, wherein the corresponding routes of all the participants are combined to form at least one route matching the route shape; and if the route information comprises the corresponding route of the participant, determining that the route information comprises at least one route matching the route shape.

6. The method according to claim 5, wherein the method further comprises:
determining a workout parameter specified by each participant, wherein the corresponding route of the participant comprises a route that is in the route information comprised in the map information specified by the participant and that meets the workout parameter specified by the participant.

7. The method according to claim 5 or 6, wherein the method further comprises:
mapping the at least one route in the map information;
determining a target route from the mapped at least one route according to a preset rule or user selection, wherein the target route comprises the corresponding route of each participant;
sending the corresponding route of each participant that is comprised in the target route to the corresponding participant;
receiving a workout track sent by each corresponding participant; and
splicing all the workout tracks.

8. The method according to claim 3, wherein the method further comprises:
obtaining a specified quantity of sub-routes; and
dividing each of the at least one route into multiple sub-routes whose quantity matches the specified quantity of sub-routes.

9. The method according to claim 8, wherein the method further comprises:
mapping the at least one route in the map information;
determining a target route from the mapped at least one route according to a preset rule or user selection, wherein the target route comprises multiple sub-routes; and
recording a workout track of the user.

10. The method according to any one of claims 4, 7, and 9, wherein the determining a target route from the mapped at least one route according to a preset rule or user selection comprises:
for each mapped route, obtaining an air quality index of an area to which the route belongs, and determining, from the at least one route, a route with a minimum air quality index as the target route according to all the air quality indexes; or
for each mapped route, obtaining people flow information of the route, and determining, from the at least one route, a route with minimum people flow as the target route according to all the people flow information; or
receiving a selection instruction for any one of the mapped at least one route, and determining a selected route as the target route, so as to respond to the selection instruction.

11. The method according to claim 1, wherein the determining at least one route that is in the map information and matches the route shape comprises:
if the specified map information does not comprise route information, planning, in an area specified in the map information, at least one route matching the route shape.

12. An electronic device, comprising:
a first obtaining unit, configured to obtain a specified route shape;
a second obtaining unit, configured to obtain specified map information;
a determining unit, configured to determine at least one route that is in the map information and matches the route shape; and
a recommendation unit, configured to recommend the at least one route to a user of the electronic device.

13. The electronic device according to claim 12, wherein the determining unit comprises:
a judging sub-unit, configured to determine, if the specified map information comprises route information, whether the route information comprises at least one route matching the route shape; and
a determining sub-unit, configured to: when the judging sub-unit determines, if the specified map information comprises route information, that the route information comprises at least one route matching the route shape, determine the at least one route.

14. The electronic device according to claim 13, wherein the electronic device further comprises:
a third obtaining unit, configured to obtain a specified workout parameter; and
the judging sub-unit is specifically configured to: if the specified map information comprises route information, determine whether the route information comprises at least one route that matches the route shape and meets the workout parameter.

15. The electronic device according to any one of claims 12 to 14, wherein the electronic device further comprises:
a first mapping unit, configured to map the at least one route in the map information, wherein
the determining unit is further configured to determine a target route from the mapped at least one route according to a preset rule or user selection; and
a first recording unit, configured to record a workout track of the user.

16. The electronic device according to claim 13, wherein the determining sub-unit is further configured to determine at least one participant;
the second obtaining unit is specifically configured to obtain map information specified by each participant; and
the judging sub-unit is specifically configured to: for each participant, if the map information specified by the participant comprises route information, determine whether the route information comprised in the map information specified by the participant comprises a corresponding route of the participant, wherein the corresponding routes of all the participants are combined to form at least one route matching the route shape; and if the route information comprises the corresponding route of the participant, determine that the route information comprises at least one route matching the route shape.

17. The electronic device according to claim 16, wherein the determining sub-unit is further configured to determine a workout parameter specified by each participant, wherein the corresponding route of the participant comprises a route that is in the route information comprised in the map information specified by the participant and that meets the workout parameter specified by the participant.

18. The electronic device according to claim 16 or 17, wherein the electronic device further comprises:
a second mapping unit, configured to map the at least one route in the map information, wherein
the determining unit is further configured to determine a target route from the mapped at least one route according to a preset rule or user selection, wherein the target route comprises the corresponding route of each participant;
a sending unit, configured to send the corresponding route of each participant that is comprised in the target route to the corresponding participant;
a receiving unit, configured to receive a workout track sent by each corresponding participant; and
a splicing unit, configured to splice all the workout tracks.

19. The electronic device according to claim 14, wherein the third obtaining unit is further configured to obtain a specified quantity of sub-routes; and
the electronic device further comprises:
a division unit, configured to divide each of the at least one route into multiple sub-routes whose quantity matches the specified quantity of sub-routes.

20. The electronic device according to claim 19, wherein the electronic device further comprises:
a third mapping unit, configured to map the at least one route in the map information, wherein
the determining unit is further configured to determine a target route from the mapped at least one route according to a preset rule or user selection, wherein the target route comprises multiple sub-routes; and
a second recording unit, configured to record a workout track of the user.

21. The electronic device according to any one of claims 15, 18, and 20, wherein a manner in which the determining unit determines a target route from the mapped at least one route according to a preset rule or user selection is specifically:
for each mapped route, obtaining an air quality index of an area to which the route belongs, and determining, from the at least one route, a route with a minimum air quality index as the target route according to all the air quality indexes; or
for each mapped route, obtaining people flow information of the route, and determining, from the at least one route, a route with minimum people flow as the target route according to all the people flow information; or
receiving a selection instruction for any one of the mapped at least one route, and determining a selected route as the target route, so as to respond to the selection instruction.

22. The electronic device according to claim 12, wherein a manner in which the determining unit determines at least one route that is in the map information and matches the route shape is specifically:
if the specified map information does not comprise route information, planning, in an area specified in the map information, at least one route matching the route shape.

23. An electronic device, comprising a processor, an input apparatus, an output apparatus, and a memory, wherein the processor, the input apparatus, the output apparatus, and the memory are separately connected to a communications bus, the memory stores a group of program code, and the processor is configured to invoke the program code stored in the memory to perform the following steps:
obtaining a specified route shape by using the input apparatus;
obtaining specified map information by using the input apparatus;
determining at least one route that is in the map information and matches the route shape; and
recommending the at least one route to a user of the electronic device by using the output apparatus.

24. The electronic device according to claim 23, wherein that the processor determines at least one route that is in the map information and matches the route shape comprises:
determining, if the specified map information comprises route information, whether the route information comprises at least one route matching the route shape; and
if the route information comprises at least one route matching the route shape, determining the at least one route.

25. The electronic device according to claim 24, wherein the processor is further configured to invoke the program code stored in the memory to perform the following step:
obtaining a specified workout parameter by using the input apparatus; and
that the processor determines, if the specified map information comprises route information, whether the route information comprises at least one route matching the route shape comprises:
if the specified map information comprises route information, determining whether the route information comprises at least one route that matches the route shape and meets the workout parameter.

26. The electronic device according to any one of claims 23 to 25, wherein the processor is further configured to invoke the program code stored in the memory to perform the following steps:
mapping the at least one route in the map information by using the output apparatus;
determining a target route from the mapped at least one route according to a preset rule or user selection; and
recording a workout track of the user.

27. The electronic device according to claim 24, wherein the processor is further configured to invoke the program code stored in the memory to perform the following step:
determining at least one participant;
that the processor obtains specified map information by using the input apparatus comprises:
obtaining, by using the input apparatus, map information specified by each participant; and
that the processor determines, if the specified map information comprises route information, whether the route information comprises at least one route matching the route shape comprises:
for each participant, if the map information specified by the participant comprises route information, determining whether the route information comprised in the map information specified by the participant comprises a corresponding route of the participant, wherein the corresponding routes of all the participants are combined to form at least one route matching the route shape; and if the route information comprises the corresponding route of the participant, determining that the route information comprises at least one route matching the route shape.

28. The electronic device according to claim 27, wherein the processor is further configured to invoke the program code stored in the memory to perform the following step:
determining a workout parameter specified by each participant, wherein the corresponding route of the participant comprises a route that is in the route information comprised in the map information specified by the participant and that meets the workout parameter specified by the participant.

29. The electronic device according to claim 27 or 28, wherein the processor is further configured to invoke the program code stored in the memory to perform the following steps:
mapping the at least one route in the map information by using the output apparatus;
determining a target route from the mapped at least one route according to a preset rule or user selection, wherein the target route comprises the corresponding route of each participant;
sending the corresponding route of each participant that is comprised in the target route to the corresponding participant by using the output apparatus;
receiving, by using the input apparatus, a workout track sent by each corresponding participant; and
splicing all the workout tracks.

30. The electronic device according to claim 25, wherein the processor is further configured to invoke the program code stored in the memory to perform the following steps:
obtaining a specified quantity of sub-routes by using the input apparatus; and
dividing each of the at least one route into multiple sub-routes whose quantity matches the specified quantity of sub-routes.

31. The electronic device according to claim 30, wherein the processor is further configured to invoke the program code stored in the memory to perform the following steps:
mapping the at least one route in the map information by using the output apparatus;
determining a target route from the mapped at least one route according to a preset rule or user selection, wherein the target route comprises multiple sub-routes; and
recording a workout track of the user.

32. The electronic device according to any one of claims 26, 29, and 31, wherein that the processor determines a target route from the mapped at least one route according to a preset rule or user selection comprises:
for each mapped route, obtaining, by using the input apparatus, an air quality index of an area to which the route belongs, and determining, from the at least one route, a route with a minimum air quality index as the target route according to all the air quality indexes; or
for each mapped route, obtaining people flow information of the route by using the input apparatus, and determining, from the at least one route, a route with minimum people flow as the target route according to all the people flow information; or
receiving a selection instruction for any one of the mapped at least one route by using the input apparatus, and determining a selected route as the target route, so as to respond to the selection instruction.

33. The electronic device according to claim 23, wherein that the processor determines at least one route that is in the map information and matches the route shape comprises:
if the specified map information does not comprise route information, planning, in an area specified in the map information, at least one route matching the route shape.

34. A graphical user interface of an electronic device, wherein the electronic device comprises a display, an input apparatus, an output apparatus, a memory, and a processor that is configured to execute one or more application programs stored in the memory, and the graphical user interface comprises at least two display areas to:
display specified map information in a first display area;
detect an input instruction in a second display area, wherein the input instruction comprises an entered route shape; and
in response to the input instruction, map, in the specified map information, at least one route matching the route shape.

35. The graphical user interface according to claim 34, wherein the input instruction further comprises an entered workout parameter, and the mapping, in the specified map information, at least one route matching the route shape comprises:
mapping, in the specified map information, at least one route that matches the route shape and meets the workout parameter.

36. The graphical user interface according to claim 34 or 35, wherein the graphical user interface further comprises:
highlighting each of the at least one route by using a different color.

37. The graphical user interface according to claim 36, wherein the graphical user interface further comprises:
in response to a detected selection instruction for a target route in the at least one route, unhighlighting a route other than the target route in the at least one route.

38. A computer storage medium, wherein the computer storage medium stores a program, and when the program runs, steps in any one of claims 1 to 11 are performed.
